# EUROPÄISCHE PATENTANMELDUNG

(11) **EP 4 389 574 A1**
(43) Veröffentlichungstag der Anmeldung: **26.06.2024**
(21) Anmeldenummer: 23215443.5
(22) Anmeldetag: 11.12.2023
(51) Int. Cl.: B62J 11/10, B62K 21/12

(54) **VERFAHREN ZUM HERSTELLEN EINER LENKERANORDNUNG**

(30) Priorität: 20.12.2022 DE 202022107086 U
(71) Anmelder: Weber Fibertech GmbH, 88677 Markdorf (DE)
(72) Erfinder: AHMAD, Bilal, 88090 Immenstaad (DE); STÖTZNER, Norbert, 88677 Markdorf (DE); SONNENSTÄDT, Björn, 88677 Markdorf (DE)
(74) Vertreter: RDL Patentanwälte PartG mbB

(57) **Zusammenfassung**

Verfahren zum Herstellen einer Lenkeranordnung, wobei die Lenkeranordnung (10) einen Lenker (12) und einen Vorbau (14) aufweist, und der Lenker (12) und der Vorbau (14) in einem Stück mittels einer Fluidinjektionstechnik hergestellt werden.

## Beschreibung

Die vorliegende Erfindung betrifft ein Verfahren zum Herstellen einer Lenkeranordnung und eine solche Lenkeranordnung, die einen Lenker und einen Vorbau umfasst.

Die vorgestellte Lenkeranordnung wird bei Zweirädern, bspw. bei Fahrrädern, Lastenrädern, sogenannten E-Bikes und ähnlichen Fahrzeugen, eingesetzt. Es sind aber auch Anwendungen in anderen Fahrzeugen, wie bspw. Quad, Wasserfahrzeug, Schneemobil usw., denkbar. Die Lenkanordnung umfasst dabei einen Lenker, der dem Fahrer als Lenkhandhabe dient, und einen Vorbau. Der Lenker ist Teil des Zweirads und mit einem Gabelschaft über den Vorbau verbunden. Der Gabelschaft wiederum ist in einem Steuerrohr geführt und geht in eine Gabel, in der das angelenkte Rad gehalten ist, über. Auf diese Weise kann der Fahrer das Zweirad steuern.

Es ist bekannt, die beiden Komponenten der Lenkanordnung, den Lenker und den Vorbau, als separate bzw. getrennte metallische Komponenten auszubilden. Dies bedeutet, dass der metallische Lenker und der Vorbau getrennt gefertigt und dann zusammengefügt werden müssen, was zu erhöhten Kosten und einem höheren Gewicht führt.

Als Alternative wurde überlegt, die beiden Bauteile mittels Spritzgießens mit unverstärkten oder verstärkten Kunststoffmaterialien herzustellen. Es hat sich jedoch gezeigt, dass auf diese Weise kein ausreichend stabiler bzw. starker Aufbau zu realisieren ist, der geeignet ist, die aufgebrachten bzw. anliegenden Lasten bzw. Belastungen zu tragen.

Die Druckschrift DE 298 13 642 A1 beschreibt einen Fahrradrahmen, der einen Hauptrahmen, eine Vordergabel und eine Lenkstange aufweist. Diese Bauteile werden jeweils durch Kunststoffeinspritzen gefertigt. In der Druckschrift wird eine Lenkstange beschrieben, die einstückig mit einem Lenkstangenrohr, das einem Gabelschaft entspricht, ausgebildet ist.

Die Druckschrift DE 20 2021 104 254 A1 beschreibt eine Lenkstangenanordnung mit einer Lenkstange und einer Stütze. An einer Außenumfangsfläche der Lenkstange kann eine Abdeckung angeklebt werden, die aber nur zur Abdeckung dient und keinerlei strukturelle Unterstützung bietet.

Aus der Druckschrift US 6 588 297 B1 ist eine integrierte Lenkeranordnung bzw. eine Fahrsteueranordnung bekannt, die an ein lenkergelenktes Fahrzeug gekoppelt werden kann. Die Druckschrift beschreibt eine Stützstruktur, die Teil des Lenkers ist, in der eine Verstärkung vorgesehen sein kann.

Vor diesem Hintergrund werden ein Verfahren gemäß Anspruch 1 sowie eine Lenkeranordnung mit den Merkmalen des Anspruchs 7 vorgestellt. Ausführungen ergeben sich aus den abhängigen Ansprüchen, aus der Beschreibung und der Zeichnung.

Das beschriebene Verfahren dient zum Herstellen einer Lenkeranordnung, die für ein Fahrzeug, wie bspw. ein Zweirad, ein Quad, ein Wasserfahrzeug, ein Schneemobil usw., vorgesehen sein kann. Bei dem Verfahren ist vorgesehen, einen Lenker und einen Vorbau in einem Stück mittels einer Fluidinjektionstechnik herzustellen. Lenker und Vorbau bilden dann die Lenkeranordnung. Der Lenker weist typischerweise zumindest abschnittsweise ein Hohlprofil auf.

In einem Schritt kann mittels der Fluidinjektionstechnik die vorgestellte Lenkeranordnung hergestellt werden. Diese kann dann über den Vorbau mit einem Gabelschaft verbunden werden. Dieser Gabelschaft ist nicht Teil der Lenkeranordnung. Lediglich Lenker und Vorbau bilden eine einstückige Einheit, die hierin als Lenkeranordnung bezeichnet wird.

In Ausgestaltung wird die Fluidinjektionstechnik mit einem Fließpressverfahren, einem Spritzgießverfahren oder einem anderen geeigneten Verfahren kombiniert.

Die verwendete Fluidinjektionstechnik kann aus einer Gruppe ausgewählt sein, die besteht aus: Wasserinjektionstechnik, Gasinjektionstechnik und Projektilinjektionstechnik.

Bei der Herstellung kann in den Vorbau eine Rippenstruktur eingebracht werden. Dies kann in dem zuvor beschriebenen Schritt der Herstellung von Lenker und Vorbau erfolgen oder in einem separaten Schritt. Diese Rippenstruktur dient der Verstärkung der gesamten Konstruktion und erhöht die Stabilität und Widerstandsfähigkeit der hergestellten Lenkeranordnung.

Zusätzlich kann in den Vorbau ein Deckel eingesetzt werden, der wiederum mittels einer Technik mit dem Vorbau verbunden wird, die ausgewählt ist aus einer Gruppe, die besteht aus: thermisches Schweißen, Kleben, mechanisches Verbinden, bspw. mittels Bolzen.

Der eingesetzte Deckel kann zum einen als Abdeckung dienen und zum anderen als zusätzliches strukturelles Element, das der Stabilität der gesamten Konstruktion zuträglich ist. Hierzu ist der Deckel entsprechend ausgebildet. Der wird typischerweise mit CAE-Werkzeugen bzw. Tools, wie bspw. der FEM-Simulation (FEM: Finite Elemente Methode) so gestaltet, dass wenn dieser mit den Rippen des Vorbaus verbunden wird, dieser die auf den Lenker wirkende Kraft trägt.

Fluidinjektionstechnik (FIT) ist ein Überbegriff für Verfahren, bei denen durch die Injektion eines Fluids Hohlräume erzeugt werden. Die Fluidinjektionstechnik kann dabei mit einem Spritzgießen, einem Fließpressverfahren oder irgendeinem anderen geeigneten Verfahren kombiniert werden. FIT wird dabei insbesondere in Verbindung mit Kunststoffen, insbesondere mit faserverstärkten Kunststoffen, eingesetzt. Zusätzlich zu den üblichen Konstruktionsmerkmalen von Kunststoffteilen kann diese Technik bzw. dieser Prozess dazu verwendet werden, um Hohlprofile in den Komponenten herzustellen, wobei dies mit geringen Kosten möglich ist. Aufgrund der hohlen Geometrie der Bauteile haben FIT-Komponenten eine höhere Steifigkeit, während diese gleichzeitig leicht und kosteneffizient herzustellen sind.

Die Fluidinjektionstechnik zeigt gegenüber konventionellen Spritzgießverfahren, insbesondere bei einigen der hierin vorgestellten Ausführungen, eine Reihe von Vorteilen:
signifikante Verkürzung der Zykluszeit,
besseres Steifigkeit-/Gewichtsverhältnis,
Reduzierung von Materialeinsatz,
gleichmäßige Schwindung, weniger Verzug,
Reduzierung von Einfallstellen,
Reduzierung von Bindenähten,
Reduzierung der Schließkraft an der Spritzgussmaschnine,
Realisierung von längeren Fließwegen,
erhöhte Design-Möglichkeiten der Bauteile.

Die vorgestellte Lenkeranordnung ist bspw. für ein Zweirad, bspw. ein Fahrrad oder ein E-Bike, vorgesehen. Die Lenkeranordnung weist einen Lenker und einen Vorbau auf, wobei der Lenker und der Vorbau in einem Stück, d. h. einstückig, mittels einer Fluidinjektionstechnik hergestellt sind. Der Lenker weist zumindest abschnittsweise ein Hohlprofil auf, d. h. dieser ist zumindest abschnittsweise hohl, bspw. wie ein Rohr geformt.

Die vorgestellte Lenkeranordnung kann auch in anderen Fahrzeugen, wie z. B. Quad, Wasserfahrzeug, Schneemobil, eingesetzt werden.

Der Vorbau verbindet den Lenker mit dem Gabelschaft, der wiederum in einem Steuerrohr geführt ist. Die Lenkbewegung des Fahrers, die über den Lenker eingeleitet wird, wird auf diese Weise auf das angelenkte Rad, typischerweise das Vorderrad, übertragen.

Es zeigt sich, dass durch eine Herstellung des Lenkers und des Vorbaus mittels einer Fluidinjektionstechnik aus einem Kunststoffmaterial, bspw. einem kohlefaser- oder glasfaserverstärkten thermoplastischen Kunststoffmaterial, um ein Stück bzw. Bauteil zu erlangen, eine ausreichend stabile Konstruktion erreicht werden kann. Auf diese Weise kann ebenfalls die Anzahl an Bauteilen reduziert werden. Auch kann das Gewicht verringert werden, während gleichzeitig die erforderliche strukturelle Integrität, d. h. eine Steifigkeit und Festigkeit, erreicht wird.

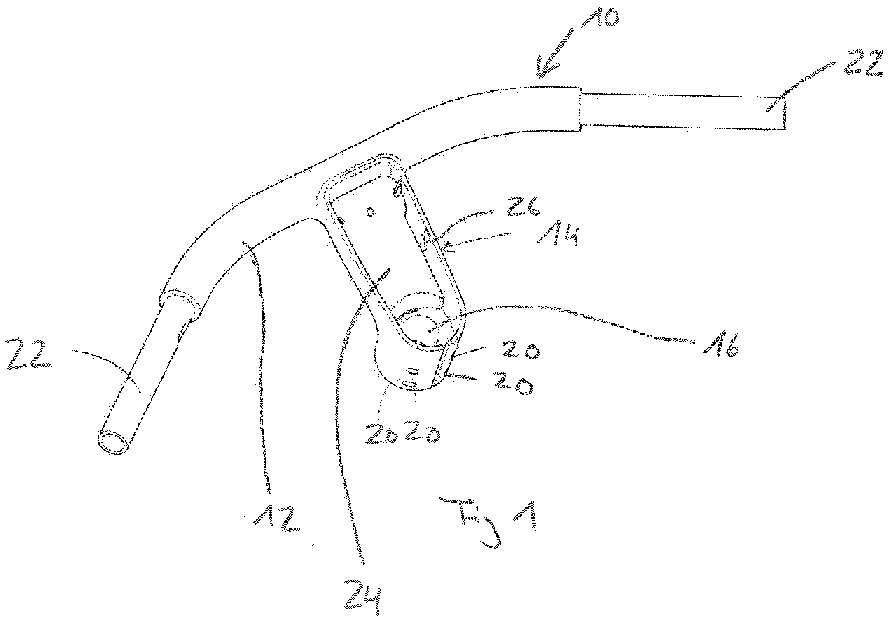

Das zusätzliche Anbringen eines Deckels, wie dies bspw. in Figur 1 zu sehen ist, kann weitere Vorteile hinsichtlich der Steifigkeit und Festigkeit mit sich bringen.

Die neu gestaltete Lenkeranordnung bietet zudem Platz zum Aufnehmen von elektronischen Einrichtungen in dem Vorbau. Weiterhin können bspw. Bremskabel und Schläuche innerhalb und außerhalb des Hohlprofils des Lenkers geführt werden.

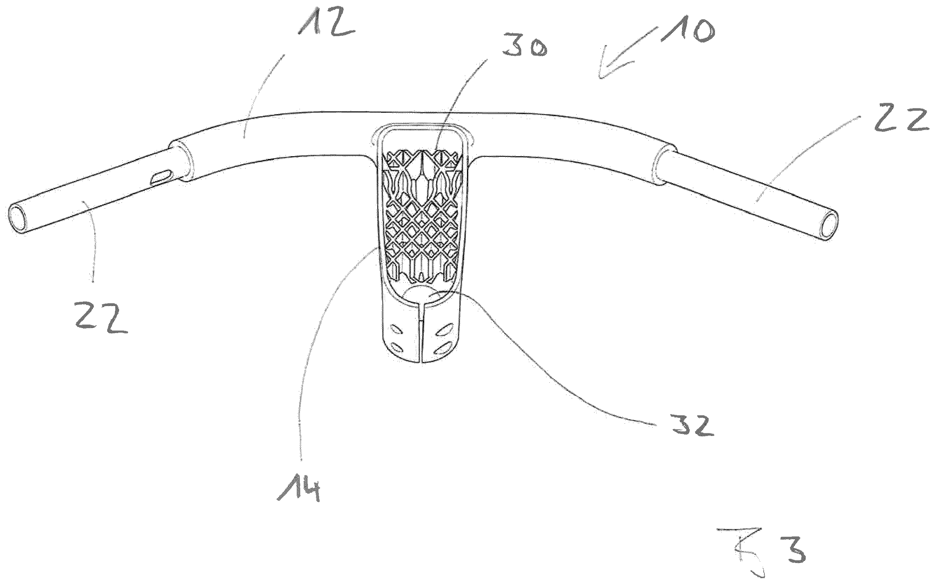

Der Lenker und der Vorbau sind als ein Stück bzw. Bauteil gestaltet bzw. gefertigt, siehe Figur 3, wobei dieses unter Verwendung einer Fluidinjektionstechnik hergestellt werden kann. Dabei kann eine Wasserinjektionstechnik, eine Gasinjektionstechnik oder eine Projektilinjektionstechnik eingesetzt werden.

Das Innenprofil des hohlen Lenkers ist bspw. rund oder elliptisch. Es sind aber auch andere Innenprofile möglich. Bei der Wasserinjektionstechnik ist die Form des Hohlprofils von der äußeren Form des Querschnitts abhängig. Bei der Projektilinjektionstechnik nimmt das Hohlprofil die Form des Projektils an.

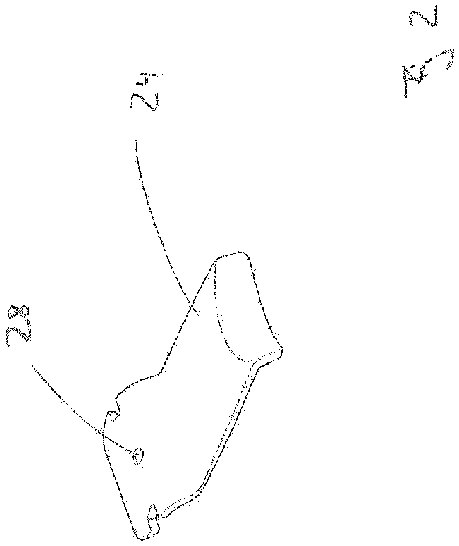

Auf bzw. in dem Vorbau kann eine Rippenstruktur vorgesehen sein. Diese ist bspw. angeformt, so dass das gesamte Bauteil in einem Schritt hergestellt werden kann. Um den Vorbau noch stabiler bzw. stärker zu gestalten, kann ein Deckel, siehe Figur 2, vorgesehen sein, der auf den Rippen bzw. auf der Rippenstruktur angebracht ist. Der Deckel kann bspw. mittels eines Heizelementschweißens oder eines Verklebens angebracht bzw. befestigt sein. Diese kostengünstige Leichtbau-Konstruktion ist in der Lage, alle möglichen Lasten aufzunehmen, die an dem Lenker und der Lenkeranordnung auftreten können. Dies wurde durch Tests bestätigt.

Der Vorbau kann selbstverständlich auch ohne Rippen ausgebildet sein. In diesem Fall kann der Deckel an einer offenen Umgrenzung bzw. Begrenzung des Vorbaus angebracht sein, so dass ein geschlossenes Profil erreicht wird. Dies führt zu einer ausreichenden mechanischen Stabilität, während das Innere des Vorbaus abgeschlossen bzw. begrenzt ist.

Die integrierte Lenkeranordnung mit Lenker und Vorbau kann ohne Deckel, wie dies in Figur 3 dargestellt ist, verwendet werden. Die Gestaltung der Rippen kann für eine funktionale Integration eingerichtet sein. Dies verringert auch die Anzahl an Bauteilen auf Kosten der Festigkeitsreduktion des Gesamtaufbaus. Eine kosteneffiziente Strategie sieht bspw. vor, Lenker und Vorbau mit Rippen herzustellen, siehe Figur 3, und zu testen. Wenn der Test bestanden wird, wird kein Deckel benötigt. Wenn der Test nicht bestanden wird, muss der Deckel hergestellt und gefügt werden, um die Festigkeit zu erhöhen.

Der Vorbau kann frei gestaltet sein, einschließlich einer funktionalen Integration von Merkmalen, wie bspw. ein Loch für Schrauben in Rippen oder Deckel, Klipps bzw. Klemmen für eine abnehmbare Schutzabdeckung.

Die vorgeschlagene Gestaltung bietet ausreichend Platz innerhalb des Vorbaus, um elektronische Einrichtungen aufzunehmen. Die elektronischen Einrichtungen können geschützt werden, indem eine bspw. abnehmbare Schutzabdeckung auf die offene Seite des Vorbaus angebracht wird.

Bremskabel und Steuerkabel für elektronische Einrichtungen können durch das Innere des Hohlprofils des Lenkers geführt werden. Ein Führen der Kabel an der Außenseite ist möglich, indem bspw. Kanäle, bspw. in Nutenform, verwendet werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnung.

### Kurze Beschreibung der Zeichnung

Figur 1 zeigt in einer perspektivischen Darstellung eine Ausführungsform der vorgestellten Lenkeranordnung.
Figur 2 zeigt den Deckel aus Figur 1.
Figur 3 zeigt die Ausführungsform der Lenkeranordnung aus Figur 1 ohne Deckel.
Figur 4 zeigt die Lenkanordnung aus Figur 3 in einer Schnittdarstellung.
Figur 5 zeigt eine weitere Ausführungsform der Lenkeranordnung in einer Ansicht von unten.
Figur 6 zeigt anhand von mehreren Abbildungen einen möglichen Ablauf des vorgestellten Verfahrens.

### Ausführungsformen der Erfindung

Die Erfindung ist anhand von Ausführungsformen in der Zeichnung schematisch dargestellt und wird nachfolgend unter Bezugnahme auf die Zeichnung ausführlich beschrieben.

Figur 1 zeigt eine Ausführungsform der Lenkeranordnung, die insgesamt mit der Bezugsziffer 10 bezeichnet ist. Die Darstellung zeigt einen Lenker 12 und einen Vorbau 14, die zusammen als ein Stück mittels einer Fluidinjektionstechnik hergestellt sind. Dies sichert einen stabilen Aufbau der Gesamtanordnung. Der Vorbau 14 verbindet den Lenker 12 mit einem Gabelschaft 16, der hier nicht dargestellt ist. Zu erkennen ist die Öffnung 16 bzw. das Loch 16, in dem der Gabelschaft gelagert ist.

Von Bedeutung ist, dass der Lenker 12 und der Vorbau 14 eine Einheit bilden, die hier als Lenkeranordnung 10 bezeichnet wird. Diese Lenkeranordnung 10 ist mit einem Gabelschaft (hier nicht dargestellt) zu verbinden, der nicht Teil der Lenkeranordnung 10 ist. Der Gabelschaft ist somit ein von der Lenkeranordnung 10 getrenntes Bauteil und nicht einteilig bzw. einstückig mit dieser Lenkeranordnung ausgebildet.

Der Lenker 12 ist zumindest abschnittsweise hohl, so dass durch diesen bspw. Bremskabel und Steuerkabel geführt werden können. Weiterhin ist der Lenker 12 gebogen ausgeführt, an gegenüberliegenden Enden des Lenkers 12 sind Handgriffe 22 vorgesehen. Es sind aber auch auf andere Weise geformte Lenker und auch gerade Lenker denkbar. Eine Lenkbewegung des Lenkers 12, eingeleitet im Bereich der Handgriffe 22, wird über den Vorbau 14 und den Gabelschaft auf das angelenkte Rad übertragen.

Der Vorbau 14 ist in der Art einer Schale mit einer offenen Seite aufgebaut, in diesen Bereich ist ein Deckel 24 eingesetzt, der einen Raum, der hier nicht zu erkennen ist, im Vorbau abdeckt und dennoch noch Platz 26 oberhalb des Deckels 24 im Vorbau zur Verfügung lässt, um bspw. technische Einrichtungen, wie bspw. Messgeräte oder Anzeigegeräte, aufzunehmen. Diese können dann wiederum mit einer Schutzabdeckung abgedeckt werden.

Bei diesem Deckel 24 ist zu beachten, dass dieser nicht nur zur Abdeckung dient, sondern auch als Strukturbauteil ausgebildet sein kann und den gesamten Aufbau strukturell unterstützen kann. Der Deckel 24 wird daher auch als Strukturdeckel bezeichnet.

Der Deckel 24 kann aus dem gleichen Material wie die Lenkeranordnung 10 spritzgegossen werden, wodurch eine thermische Verschweißung möglich ist. Eine weitere Möglichkeit, den Deckel 24 bzw. Strukturdeckel mit den Vorbaurippen (Bezugsziffer 30 in Figur 3) zu verbinden bzw. verschweißen, besteht in der Verwendung des thermogeformten faserverstärkten Verbundmaterials mit dem gleichen Matrixmaterial wie die Lenkeranordnung 10. Die Möglichkeit, bei dem Strukturdeckel andere Materialien zu verwenden, besteht, wenn andere Verbindungsmethoden, wie bspw. Klebstoff oder Befestigungselemente, verwendet werden. Bei Belastung der Lenkeranordnung 10 bildet der Deckel 24 ein geschlossenes Profil zur Lastaufnahme. Dies ist insbesondere zusammen mit der Rippenstruktur für die Strukturfestigkeit z. B. bei Torsionsbelastung von großer Bedeutung, wenn der Handgriff 22 des Lenkers 12 von einer Seite nach unten gedrückt bzw. nach oben gezogen wird.

Die vier Löcher 20 sind für eine Klemmverbindung mit zwei Schrauben vorgesehen. Es können hier aber auch alternative Möglichkeiten zum Verbinden eingesetzt werden.

Figur 2 zeigt in einer perspektivischen Darstellung den Deckel 24, der ebenfalls als Kunststoff-Spritzgussbauteil ausgebildet sein kann. Der Deckel 24 ist dem Vorbau 14 aus Figur 1 bzw. dessen schalenartigen Aufbau angepasst, so dass der Deckel 24 einen Bereich in dem Vorbau 14 möglichst dicht abschließt. Auf diese Weise können Einrichtungen in dem Vorbau 14 unter dem Deckel 24 vor Umwelteinflüssen geschützt werden. Weiterhin ist in dem Deckel 24 ein Schraubansatz 28 vorgesehen, der es ermöglicht, elektronische Geräte an den Deckel 24 zu schrauben. Dieses Design kann gemäß den Montageanforderungen der elektronischen Geräte geändert werden.

Figur 3 zeigt die Lenkeranordnung 10 mit dem Lenker 12 und dem Vorbau 14, aber ohne Deckel. Zu erkennen in dem Vorbau 14 ist eine Rippenstruktur 30, die aus einer Vielzahl von Rippen besteht und die die mechanische Stabilität des Vorbaus 14 und damit der Gesamtanordnung steigert. Diese Rippenstruktur 30 kann bereits im Herstellungsprozess der Lenkeranordnung 10 gespritzt werden oder auch nachträglich angebracht bzw. angeformt werden.

In der gezeigten Darstellung sind die Rippen nach oben gerichtet. Diese Richtung kann auch umgekehrt werden, so dass die Oberseite eine ebene Oberfläche aufweist.

Die Rippenstruktur 30 bzw. das Design der Rippenstruktur 30 verläuft bei dieser Ausführung in diagonaler Richtung. Das Rippendesign kann in Abhängigkeit von der mechanischen Anforderung verändert werden.

Weiterhin zeigt die Darstellung ein Loch 32, durch das der Gabelschaft zu führen ist.

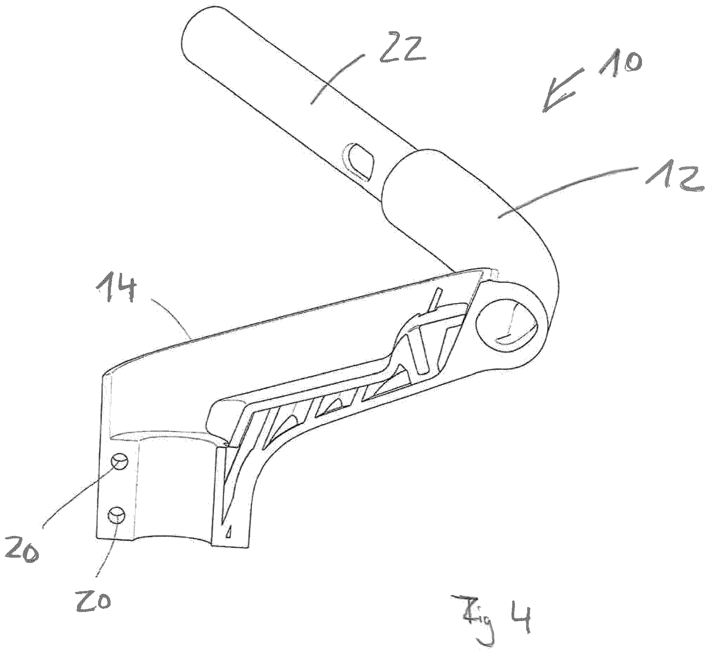

Figur 4 zeigt einen Schnitt durch einen Abschnitt der Lenkanordnung 10, wie diese in Figur 3 dargestellt ist. Die Darstellung zeigt die linke Seite des Lenkers 12 mit dem Vorbau 14, der hier geschnitten dargestellt ist. Deutlich zu erkennen ist die Rippenstruktur 30. Auch das Hohlprofil des Lenkers 12 ist sichtbar. Dieses ist nicht vollständig kreisförmig, da die Wandstärke des Hohlquerschnitts vom Außenquerschnitt abhängt.

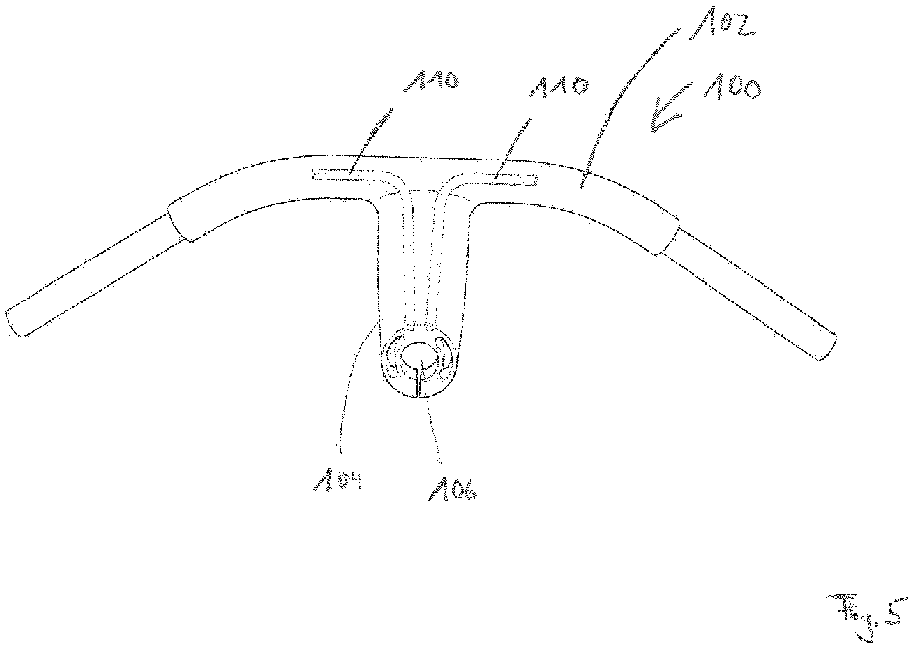

Figur 5 zeigt in einer Ansicht von unten eine Lenkanordnung 100 mit einem Lenker 102 und einem Vorbau 104. Ebenfalls zu erkennen ist das Loch 106 für den Gabelschaft. In dem Lenker 102 verlaufen zwei Kanäle 110 zur Aufnahme von bspw. Leitungen, Kabeln, Kabelzügen, Steuerungskabeln, Schläuchen oder anderen zu führenden Elementen.

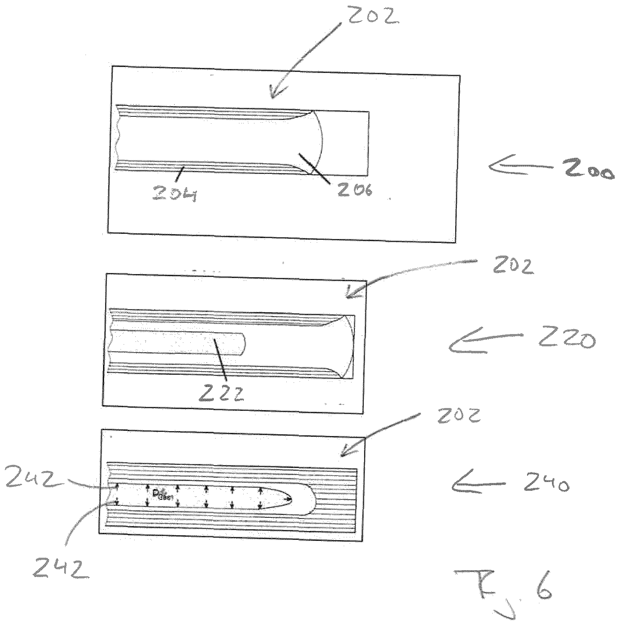

Figur 6 zeigt in drei Abbildungen einen möglichen Ablauf des Verfahrens basierend auf der Fluidinjektionstechnik (FIT). In einem ersten Schritt erfolgt ein Einspritzen der Polymerschmelze in eine Kavität. Figur 6 zeigt oben (Bezugsziffer 200) einen Hohlraum 202 im Werkzeug nach dem Einspritzen der Polymerschmelze. Bezugsziffer 204 bezeichnet eine eingefrorene Randschicht. Bezugsziffer 206 bezeichnet eine flüssige Seele.

Die Form des Hohlraums 202 stimmt mit der der Außenform des Hohlprofilteils überein. Beim Einspritzen der geschmolzenen Polymerschmelze, hier von links nach rechts, beginnt das geschmolzene Polymer, das mit den Werkzeugwänden in Kontakt kommt, zunächst abzukühlen. Daher ist zu sehen, dass nur die Randschicht gefroren ist, die Mitte jedoch in geschmolzener Form ist.

In einem nächsten Schritt erfolgt eine Injektion des Fluids in die flüssige Seele des Polymers. Figur 6 zeigt in der Mitte (Bezugsziffer 220) den Hohlraum 202 während der Fluidinjektion. Bezugsziffer 222 bezeichnet injiziertes Fluid.

In 220 wird das Fluid eingespritzt. Das Fluid wird so eingespritzt, dass das geschmolzene Material in der Mitte herausgedrückt wird und der gewünschte Hohlkanal entsteht. Anschließend wird bei 240 die Fluideinspritzphase auf die Nachddruckphase umgeschaltet, in der im Kanal ein Druck aufgebaut wird, der den Kunststoff gegen die Werkzeugwände drückt. Der Kunststoff wird auch von der Innenseite des Hohlkanals abgekühlt.

Figur 6 zeigt unten (Bezugsziffer 240) den Hohlraum 202 während der Druckhaltephase des Fluids. Pfeile 242 verdeutlichen den Gasdruck. Anstelle eines Gases kann ein Fluid verwendet werden.

In einem anschließenden Schritt erfolgt ein Entfernen des Fluids aus dem Hohlraum. Es wird dann das fertige Bauteil erhalten.

Einflussfaktoren auf die Bauteileeigenschaften sind:
1. FIT-Prozess
   a. Gasinjektionstechnik (GIT), Wasserinjektionstechnik (WIT) oder Projektilinjektionstechnik (PIT)
   b. Prozessvariante
2. Maschinenparameter
   a. Fluid-Volumenstrom
   b. Verzögerungszeit
   c. Fluid-Haltezeit
   d. Schmelz-Temperatur
3. Geometrie
   a. Design des Bauteils
   b. Design des Hohlraums
   c. Design des Werkzeugs
   d. Injektionspunkt für das Fluid
4. Materialeigenschaften
   a. Struktur (amorph/teilkristallin)
   b. Füllstoff und Anteil
   c. Viskosität
   d. Feuchtegehalt

Auswahlkriterium und Vor-/Nachteil von FIT-Prozess (GIS, FIT, PIT)
GIS:
   bei Schrumpfungskompensation,
   keine Möglichkeit der Injektoranbindung an das Bauteil,
   keine Möglichkeit, das injizierte Wasser zu entfernen.
WIT
   bei Bauteilen, bei denen das Wasser kanalisierbar ist,
   bei Bauteilen, bei denen das Wasser wieder entfernbar ist,
   bei Bauteilen mit langen Kanälen,
   bei Bauteilen mit großen Durchmessern.

Die Vorteile für die Verwendung von Wasser gegenüber Gas sind:
Wasser hat eine viel höhere Kühlwirkung als Gas, das führt zu einer Kühlzeitreduzierung,
Wasser ist nahezu inkompressibel, das führt zu einer besseren Prozesskontrolle,
Wasser ist nahezu überall vorhanden und viel günstiger als Stickstoff,
Wasser ist nicht kompressibel, somit kann die Wasserinjektionsgeschwindigkeit getrennt vom Wasserdruck geregelt werden, d. h. gleiche Technologie wie an der Spritzeinheit der SGM (Spritzgussmaschine),
Wasser fingert wesentlich später als Gas in die Seitenflächen ein,
Wasser hat die 40-fach höhere Wärmekapazitätsaufnahme als Gas,
Bauteile werden von innen und außen gekühlt,
drastisch kürzere Kühlzeiten sind möglich,
größerer Durchmesser können ausgeblasen werden,
es fallen keine Fluidkosten an,
im Vergleich zu Gas ist die Reproduzierbarkeit besser.

PIT
homogene Innendurchmesser,
ideal für Röhren, keine undefinierten Flaschenhälse,
Projektil auf Injektor platziert,
Projektil durch das Fluid durch den gefüllten Hohlraum gepresst.

Vor- und Nachteile der PIT gegenüber konventioneller FIT
Vorteile sind:
   Restwanddicke der Bauteile kann eingestellt werden und ist weitestgehend unabhängig von den rheologischen Eigenschaften,
   Materialersparnis bedingt durch Wandstärkereduktion,
   Reduzierung der Zykluszeit.

Designeinschränkungen der FIT können überwunden werden,
kein direkter Kontakt des Fluids mit der Polymerschmelze.

Nachteile sind:
Es sind ausschließlich gleiche Hohlraumquerschnitte realisierbar,
zusätzlicher Aufwand für Herstellung und Handhabung bzw. Handling des Projektils ist erforderlich.

## Patentansprüche

1. Verfahren zum Herstellen einer Lenkeranordnung, wobei
die Lenkeranordnung (10, 100) einen Lenker (12, 102) und einen Vorbau (14, 104) aufweist, und
der Lenker (12, 102) und der Vorbau (14, 104) in einem Stück mittels einer Fluidinjektionstechnik hergestellt werden.

2. Verfahren nach Anspruch 1, bei dem die Fluidinjektionstechnik mit einem Fließpressverfahren, einem Spritzgießverfahren oder einem anderen geeigneten Verfahren kombiniert wird.

3. Verfahren nach Anspruch 1 oder 2, bei dem die Fluidinjektionstechnik ausgewählt ist aus einer Gruppe, die besteht aus: Wasserinjektionstechnik, Gasinjektionstechnik und Projektilinjektionstechnik.

4. Verfahren nach einem der Ansprüche 1 bis 4, bei dem in den Vorbau (14, 104) eine Rippenstruktur (30) eingebracht wird.

5. Verfahren nach einem der Ansprüche 1 bis 4, bei dem zusätzlich ein Deckel (24) in den Vorbau (14, 104) eingesetzt wird.

6. Verfahren nach Anspruch 5, bei dem bei dem der Deckel (24) mittels einer Technik mit dem Vorbau (14, 104) verbunden wird, die ausgewählt ist aus einer Gruppe, die besteht aus: thermisches Schweißen, Kleben, mechanisches Verbinden mittels Bolzen.

7. Lenkeranordnung, wobei die Lenkeranordnung (10, 100) einen Lenker (12, 102) und einen Vorbau (14, 104) aufweist, wobei
der Lenker (12, 102) und der Vorbau (14, 104) in einem Stück mittels einer Fluidinjektionstechnik hergestellt sind, und
der Lenker (12, 102) zumindest abschnittsweise ein Hohlprofil aufweist.

8. Lenkeranordnung nach Anspruch 7, bei dem in dem Vorbau (14, 104) eine Rippenstruktur (30) vorgesehen ist.

9. Lenkeranordnung nach Anspruch 7 oder 8, bei dem zusätzlich ein Deckel (24) vorgesehen ist, der in den Vorbau (14, 104) eingesetzt ist.

10. Lenkeranordnung nach einem der Ansprüche 7 bis 9, wobei der Vorbau (14, 104) Einrichtungen zum entfernbaren Anbringen einer Schutzabdeckung aufweist.
